# EUROPÄISCHE PATENTSCHRIFT

(11) **EP 2 394 191 B1**
(45) Veröffentlichungstag und Bekanntmachung des Hinweises auf die Patenterteilung: **13.12.2017**
(21) Anmeldenummer: 10702151.1
(22) Anmeldetag: 04.02.2010
(51) Int. Cl.: G02B 6/38, G02B 6/255

(54) **STECKERTEIL FÜR EINE OPTISCHE STECKVERBINDUNG**
CONNECTOR PART FOR AN OPTICAL PLUG-IN CONNECTION
UNITÉ ENFICHABLE POUR CONNEXION OPTIQUE À FICHES

(30) Priorität: 05.02.2009 CH 1642009
(43) Veröffentlichungstag der Anmeldung: 14.12.2011
(73) Patentinhaber: Diamond SA, 6616 Losone (CH)
(72) Erfinder: UBOLDI, Harry, 6596 Gordola (CH); FANTINI, Dionigi, 21030 Ghirla (IT)
(74) Vertreter: Hepp Wenger Ryffel AG
(86) Internationale Anmeldenummer: PCT/EP2010/051332
(87) Internationale Veröffentlichungsnummer: WO 2010/089336

(56) Entgegenhaltungen:
- WO-A-2004/001472
- WO-A-2009/011799
- JP-A- 2002 082 257

## Beschreibung

Die vorliegende Erfindung betrifft ein Steckerteil für eine optische Steckverbindung gemäss dem Oberbegriff von Anspruch 1.

Derartige Steckerteile werden werkseitig vormontiert, wobei die Verbindung mit dem eigentlichen Lichtwellenleiterkabel unter feldmässigen Bedingungen durch Schweissung unmittelbar am Steckerteil erfolgt. Mit der Vormontage wird bezweckt, dass die schwierige Zentrierung und Fixierung des Lichtwellenleiters im Steckerstift sowie der komplexe Schleifprozess unter geeigneten Werkbedingungen durchgeführt werden kann.

Aus dem Stand der Technik sind beispielsweise die Steckerteile aus WO 96/31795 A1 oder EP 864 888 A1 bekannt. Zum Ansetzen der Schweisselektroden sind dabei spezielle Öffnungen oder Aussparungen vorgesehen. Ein Nachteil dieser Steckerteile besteht darin, dass die Schweissstelle selbst schwer zugänglich ist und dass auch eine Beobachtung des Schweissvorgangs erschwert ist.

Weiter bekannt ist ein Steckerteil aus WO 2004/001472 A1, wonach zwei Mantelteile aus der Längsmittelachse des Steckerteils verschwenkt werden können, so dass das Ende des vormontierten Lichtwellenleiterstummels zum Schweissen optimal zugänglich ist. Nach dem Schweissvorgang werden die beiden Mantelteile mit einem Klebstoff versehen und in ihre Ausgangslage zurückgeschwenkt und verklebt. Zapfen und Zapfenöffnungen gewährleisten dabei das korrekte Positionieren. Die beiden Mantelteile sind so ausgebildet, dass sie einerseits den Mantel eines Lichtwellenleiters fest umfassen und andererseits die Schweissstelle des Lichtwellenleiters kraftfrei umhüllen. Dieses Steckerteil ist relativ komplex ausgestaltet und bedarf einer präzisen Fertigung. Ausserdem sind die beiden Mantelteile oder der Lichtwellenleiter unter feldmässigen Bedingungen mit einem Klebstoff zu versehen, was gut geschultes Personal bedingt.

WO 2009/011799 A1 beschreibt einen im Wesentlichen konventionellen Steckverbinder mit einer Knickschutztülle. Die Knickschutztülle weist an ihrem dem Stecker abgewandten Ende einen Kragen auf. Dieser Kragen dient der sicheren Verbindung mit einem entsprechend ausgebildeten Spleissschutz. Der Spleissschutz besteht aus zwei einzelnen Mantelteilen. Jedes der beiden Mantelteile weist im Innern je ein kissenähnliches Element auf, welche bei geschlossenem Spleissschutz die gespleisste Faser umschliessen. Diese kissenähnlichen Elemente können durch je ein doppelseitiges und gepolstertes Klebeband gebildet werden. Ein solcher externer Spleissschutz verlängert die Distanz zwischen Steckerinterface und freiem Kabel und stellt andererseits spezifische Anforderungen an die Knickschutztülle, welche insbesondere bei Zugbelastung keine Längenausdehnung zeigen darf.

Im Folgenden wird unter dem Begriff Lichtwellenleiter eine Glasfaser als solche verstanden, während unter dem Begriff Lichtwellenleiterkabel ein oder mehrere Lichtwellenleiter mit einem oder mehreren zusätzlichen Kunststoffummantelungen und optionalen Zugentlastungen, beispielsweise in Form von Aramidfasern, verstanden wird.

Unter einem Steckerteil wird nachfolgend ein Teil eines Steckers verstanden, welches einen Steckerstift und ein Befestigungselement zur Aufnahme eines Lichtwellenleiters oder eines Lichtwellenleiterkabels umfasst. Ein solches Steckerteil kann nach der Bestückung mit einem Lichtwellenleiter oder Lichtwellenleiterkabel in ein Steckergehäuse eingebracht werden, so dass beispielsweise ein standardisierter Steckverbinder gebildet wird.

Es ist Aufgabe der Erfindung, die Nachteile des Standes der Technik zu überwinden. Insbesondere soll ein Steckerteil zur Verfügung gestellt werden, welches den Faserstummel für die Schweissung gut zugänglich macht und einfach unter Feldbedingungen konfektionierbar ist. Sowohl die Vormontage, als auch die Endmontage des Steckerteils sollen dabei schnell und ohne aufwändige Hilfsmittel durchführbar sein. Schliesslich soll die Schweissstelle nach der Endmontage optimal gegen mechanische Belastung und gegen Verschmutzung sowie vor Umwelteinflüssen geschützt sein.

Diese Aufgabe wird durch ein Steckerteil gelöst, das die Merkmale im Anspruch 1 aufweist. Weitere Ausführungsformen ergeben sich aus den abhängigen Patentansprüchen.

Ein erfindungsgemässes Steckerteil für eine optische Steckverbindung, weist einen Steckerstift und eine hülsenartige Stifthalterung auf, wobei die Stifthalterung einen Stiftaufnahmeabschnitt und einen Lichtwellenleiteraufnahmeabschnitt umfasst. Der Stiftaufnahmeabschnitt der Stifthalterung nimmt den Steckerstift auf, während am Lichtwellenleiteraufnahmeabschnitt das Ende eines Lichtwellenleiterkabels bzw. eines Lichtwellenleiters zugfest fixierbar ist. Der Lichtwellenleiteraufnahmeabschnitt weist wenigstens zwei miteinander verbindbare Mantelteile auf, wobei wenigstens ein Mantelteil mit einem Gelenk am Stiftaufnahmeabschnitt so befestigt oder befestigbar ist, dass das Mantelteil um einen bestimmten Schwenkwinkel zwischen einer Öffnungsstellung und einer Schliessstellung schwenkbar ist. Im Steckerstift ist ein sich über eine Längsmittelachse erstreckender Lichtwellenleiterstummel gehalten, welcher mit einem Ende eines Lichtwellenleiterkabels bzw. eines Lichtwellenleiters verschweissbar ist. Dabei liegt das zu verschweissende Ende des Lichtwellenleiterstummels im Bereich der Mantelteile. Wenigstens eines der Mantelteile weist wenigstens eine vorzugsweise werkseitig angebrachte Kleberschicht zum Verbinden der wenigstens zwei Mantelteile auf. Dadurch, dass die Kleberschicht zum Verbinden der Mantelteile schon vorhanden ist, wird der Konfektionierungsprozess unter Feldbedingungen erheblich erleichtert. Ausserdem muss der Monteur keinen separaten Klebstoff mit sich führen und die korrekte Dosierung vor Ort entfällt. Ebenso wird eine Kontamination sensibler Stecker- und Werkzeugteile durch Klebstoff aufgrund unsachgemässer Handhabung vermieden.

Die Kleberschicht ist vorteilhaft je auf einer dem benachbarten Mantelteil gegenüberliegenden Berührungsfläche der Mantelteile angeordnet. Somit können die Mantelteile einfach untereinander verbunden werden und der Lichtwellenleiter wird beidseitig umfasst.

Die Kleberschicht kann vor der Verarbeitung des Steckerteils durch eine Schutzfolie abgedeckt sein. Dadurch wird die Handhabung des Steckerteils vereinfacht, die Mantelteile kleben nicht ungewollt zusammen und die Kleberschicht ist vor Verschmutzung und Austrocknung geschützt. Wenn die Schutzfolie an mindestens einer Stelle über die Kleberschicht hinausragt ist ein Fassen und Entfernen der Schutzfolie vereinfacht möglich.

Die Kleberschicht ist vorteilhaft elastisch, d.h. beim Zusammendrücken und Verkleben der beiden Mantelteile wird der zwischen den beiden Mantelteilen bzw. zwischen den beiden Kleberschichten befindliche geschweisste Lichtwellenleiter vollständig von den Kleberschichten umhüllt. Gleichzeitig wird somit der geschweisste Lichtwellenleiter vor Umwelteinflüssen, wie beispielsweise Feuchtigkeit geschützt. Ausserdem werden durch die Elastizität der Kleberschicht unnötige Spannungen an der Schweissstelle des Lichtwellenleiters vermieden.

Wenn die Kleberschicht eine Dicke zwischen 80µm und 300 µm, insbesondere zwischen 100µm und 200µm, vorzugsweise zwischen 125µm und 150µm aufweist und die Kleberschicht eine entsprechende Elastizität aufweist, kann sogar auf eine dem Lichtwellenleiter entsprechende Nut im Mantelteil verzichtet werden.

Die Kleberschicht kann aus einem doppelseitigen Klebeband bestehen. Dies erleichtert die Vormontage des Steckerteils, da somit die Schutzfolie schon standardmässig vorhanden ist.

Das Klebeband kann aus einem Trägermaterial und beidseitigem Kleber bestehen. Alternativ ist auch ein Klebeband denkbar, welches nur aus einem Kleber besteht. Vorzugsweise handelt es sich beim Kleber um einen glasfasertauglichen Stoff, beispielsweise um ein Acrylpolymer.

Der Lichtwellenleiteraufnahmeabschnitt kann ein Kopfteil zum Verbinden mit dem Stiftaufnahmeabschnitt und zwei Mantelteile aufweisen. Das Kopfteil kann beispielsweise einen mit dem Stiftaufnahmeabschnitt zusammenwirkenden Schnappverschluss aufweisen. Durch die Trennung von Lichtwellenleiteraufnahmeabschnitt und Stiftaufnahmeabschnitt können verschiedene Materialien mit unterschiedlichen Eigenschaften verwendet werden. Die Trennung hat auch Vorteile in der Fertigung der beiden Teile.

Ausserdem kann wenigstens ein Mantelteil mit einem Gelenk am Kopfteil befestigt sein. Vorteilhaft ist das Gelenk so ausgebildet, dass das Mantelteil um einen bestimmten Schwenkwinkel zwischen einer Öffnungsstellung und einer Schliessstellung schwenkbar ist. Dadurch lässt sich das Mantelteil für den Schweissvorgang aus seiner Ausgangsposition, in der es parallel zur Längsmittelachse des Steckerteils liegt, von dem zur Schweissung vorgesehenen Ende des Lichtwellenleiterstummels weg in eine Öffnungsstellung schwenken. Das zur Schweissung vorgesehenen Ende des Lichtwellenleiterstummels liegt somit frei und ist für die Schweissung gut zugänglich.

Der Stiftaufnahmeabschnitt und der Lichtwellenleiteraufnahmeabschnitt mit seinen Mantelteilen kann auch einstückig ausgebildet sein. Der Steckerstift könnte beispielsweise in den Stiftaufnahmeabschnitt eingegossen werden. Andere Arten der Befestigung wie beispielsweise Einpressen oder Einkleben sind ebenfalls denkbar. Die feldmässige Handhabung des Steckerteils wird somit vereinfacht und die Herstellung kostengünstiger, da weitere Einzelteile entfallen.

Die Stifthalterung kann jedoch auch aus zwei Schalenteilen bestehen, welche entlang der Längsmittelachse zusammensetzbar sind. Es ist ebenfalls vorteilhaft, wenn hierbei wenigstens ein Mantelteil mit einem Gelenk an einem Stiftaufnahmeabschnitt des einen Schalenteils so befestigt ist, dass das Mantelteil um einen bestimmten Schwenkwinkel zwischen einer Öffnungsstellung und einer Schliessstellung schwenkbar ist. Dabei sind die beiden Schalenteile jeweils einstückig ausgebildet, so dass wiederum nur wenige Einzelteile vorhanden sind.

Die Stifthalterung besteht vorteilhaft mindestens teilweise aus einem Kunststoffmaterial, insbesondere aus Polyphenylenoxid (PPO). Weiter ist es vorteilhaft, wenn das Gelenk als Filmscharnier ausgebildet ist.

Die Mantelteile können ineinander greifende Positioniermittel für die passgenaue Zusammenfügung aufweisen. Solche Positioniermittel haben beispielsweise die Form von vorstehenden Bolzen bzw. Ausnehmungen oder sind einfache Zapfen-Zapfenöffnung-Kombinationen. Durch diese Positioniermittel wird sichergestellt, dass die Mantelteile einfach und sicher in der korrekten Position zusammengefügt werden.

Anhand von Figuren, welche lediglich Ausführungsbeispiele darstellen, wird die Erfindung im Folgenden näher erläutert. Es zeigen:
- **Figur 1:**: eine Explositionszeichnung eines erfindungsgemässen Steckerteils,
- **Figur 2:**: einen Stiftaufnahmeabschnitt vor der Montage des Lichtwellenleiterstummels,
- **Figur 3:**: den Stiftaufnahmeabschnitt gemäss Figur 2 mit konfektioniertem Lichtwellenleiterstummel,
- **Figur 4:**: den Stiftaufnahmeabschnitt gemäss Figur 3 vor dem Verbinden mit dem Lichtwellenleiteraufnahmeabschnitt,
- **Figur 5:**: das vorkonfektionierte Steckerteil gemäss Figur 1,
- **Figur 6:**: das Steckerteil gemäss Figur 5 während der Schweissoperation,
- **Figur 7:**: das Steckerteil gemäss Figur 6 beim Abziehen einer Schutzfolie,
- **Figur 8:**: das fertig konfektionierte Steckerteil,
- **Figur 9:**: einen Querschnitt durch das Steckerteil gemäss Figur 8,
- **Figur 10:**: das Steckerteil gemäss Figur 8 vor dem Einführen in ein Steckergehäuse,
- **Figur 11:**: einen Querschnitt durch einen fertig konfektionierten Stecker.

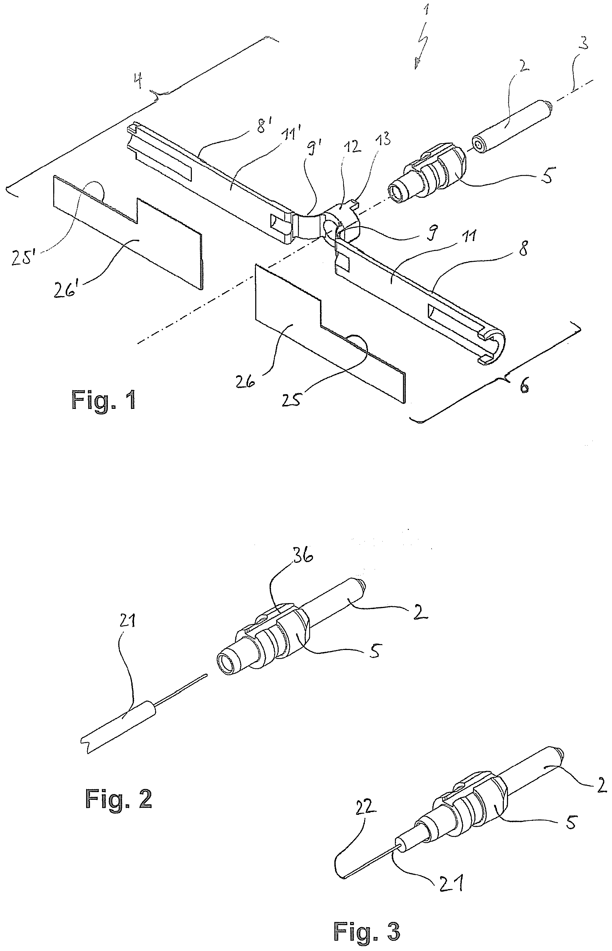

**Figur 1** zeigt eine Explositionszeichnung eines erfindungsgemässen Steckerteils 1 angeordnet an einer Längsmittelachse 3. Das Steckerteil 1 besteht aus einem Steckerstift 2, einer Stifthalterung 4, welche einen Stiftaufnahmeabschnitt 5 und einen Lichtwellenleiteraufnahmeabschnitt 6 umfasst. Der Lichtwellenleiteraufnahmeabschnitt 6 weist zwei Mantelteile 8, 8' auf, welche über je ein Gelenk 9, 9' in Form eines Filmscharniers mit einem Kopfteil 12 verbunden sind. Das Kopfteil 12 dient der Verbindung des Lichtwellenleiteraufnahmeabschnittes 6 mit dem Stiftaufnahmeabschnitt 5 und ist im Wesentlichen hülsenförmig. Für diese Verbindung weisen der Lichtwellenleiteraufnahmeabschnitt 6 und der Stiftaufnahmeabschnitt 5 Verriegelungsmittel (nicht gezeigt) auf, welche ein einfaches Aufschnappen ermöglichen. Das Kopfteil 12 weist eine Nase 13 auf, welche in eine entsprechende nutförmige Verdrehsicherung 36 im Stiftaufnahmeabschnitt 5 passt und ein Verdrehen des Lichtwellenleiteraufnahmeabschnittes 6 relativ zum Stiftaufnahmeabschnitt 5 verunmöglicht. Die beiden Mantelteile 8, 8' weisen je eine Berührungsfläche 11, 11' zur Aufnahme je einer Kleberschichten 25, 25' auf. Dabei sind die zwei Kleberschichten 25, 25' einseitig durch eine Schutzfolie 26, 26' geschützt. Zur Vereinfachung der präzisen Positionierung beim Verschliessen der beiden Mantelteile 8, 8' weisen diese an ihren kabelseitigen Enden ein Positioniermittel in Form von vorstehenden Bolzen bzw. Ausnehmungen auf.

In **Figur 2** ist ein Stiftaufnahmeabschnitt 5 vor der Montage des Lichtwellenleiterstummels 21 gezeigt. Dabei ist im Stiftaufnahmeabschnitt 5 der Steckerstift 2 schon montiert. Dieser kann eingepresst, eingeklebt oder direkt vom Stiftaufnahmeabschnitt 5 umspritzt sein. Andere Arten der Befestigung sind ebenfalls denkbar. Der Stiftaufnahmeabschnitt weist parallel zu seiner Längsachse eine nutförmige Verdrehsicherung 36 auf, welche einerseits der Aufnahme einer Nase des Lichtwellenleiteraufnahmeabschnittes (nicht gezeigt) dient und andererseits den ausgerichteten Einbau in ein Steckergehäuse gewährleistet. Der Stiftaufnahmeabschnitt 5 weist eine durchgehende Bohrung auf, so dass der Lichtwellenleiter des Lichtwellenleiterstummels 21 von der dem Steckerstift 2 abgewandten Seite durch den Stiftaufnahmeabschnitt 5 hindurch in den Steckerstift 2 geschoben werden kann. Ausserdem ist diese Bohrung auf der dem Steckerstift 2 abgewandten Seite aufgeweitet, so dass zusätzlich zum Lichtwellenleiter auch ein erster Kunststoffmantel des Lichtwellenleiterstummels 21 aufgenommen werden kann.

**Figur 3** zeigt den Stiftaufnahmeabschnitt 5 gemäss Figur 2 mit konfektioniertem Lichtwellenleiterstummel 21. Der Lichtwellenleiterstummel 21 ist im Stiftaufnahmeabschnitt 5 und dem Steckerstift 2 eingeklebt. Ausserdem ist er schon auf die richtige Länge gekürzt, das zu verschweissende Ende 22 des Lichtwellenleiterstummels 21 ragt aus dem Stiftaufnahmeabschnitt 5 hervor.

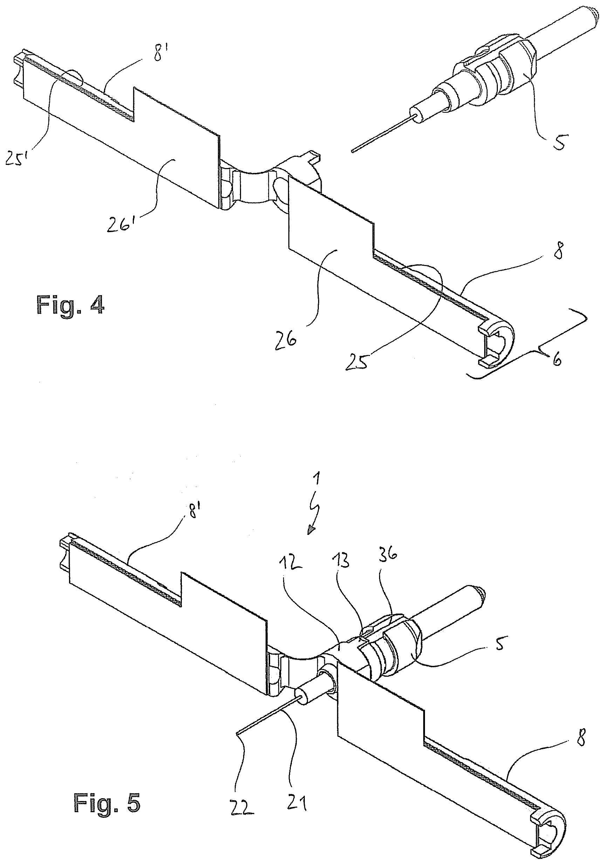

In **Figur 4** ist der Stiftaufnahmeabschnitt 5 gemäss Figur 3 vor dem Verbinden mit dem Lichtwellenleiteraufnahmeabschnitt 6 dargestellt. Die Mantelteile 8, 8' des Lichtwellenleiteraufnahmeabschnitt es 6 sind mit den Kleberschichten 25, 25' in Form eines doppelseitigen Klebebandes und den entsprechenden Schutzfolien 26, 26' bestückt. Die Kleberschicht 25, 25' entspricht in ihrer Grösse der Berührungsfläche 11, 11' (vgl. Figur 1). Die Schutzfolie 26, 26' ist L-förmig ausgebildet und überlappt die Kleberschicht seitlich. Somit wird ein einfaches Fassen der Schutzfolie 26, 26' auch bei nicht optimalen Umgebungsbedingungen gewährleistet und die Kleberschicht 25, 25' kann problemlos freigelegt werden.

**Figur 5** zeigt das vorkonfektionierte Steckerteil 1 gemäss den Figuren 1 und 4. Der Lichtwellenleiteraufnahmeabschnitt ist mit seinem Kopfteil 12 auf den Stiftaufnahmeabschnitt 5 aufgesteckt und durch die Verriegelungsmittel gesichert. Die Nase 13 des Kopfteils 12 liegt in der nutförmigen Verdrehsicherung 36 des Stiftaufnahmeabschnitts 5. Der Lichtwellenleiterstummel 21 ragt durch eine Bohrung des Kopfteils 12 hindurch so dass das zu verschweissende Ende 22 im Bereich der beiden Mantelteile 8, 8' des Lichtwellenleiteraufnahmeabschnittes zu liegen kommt.

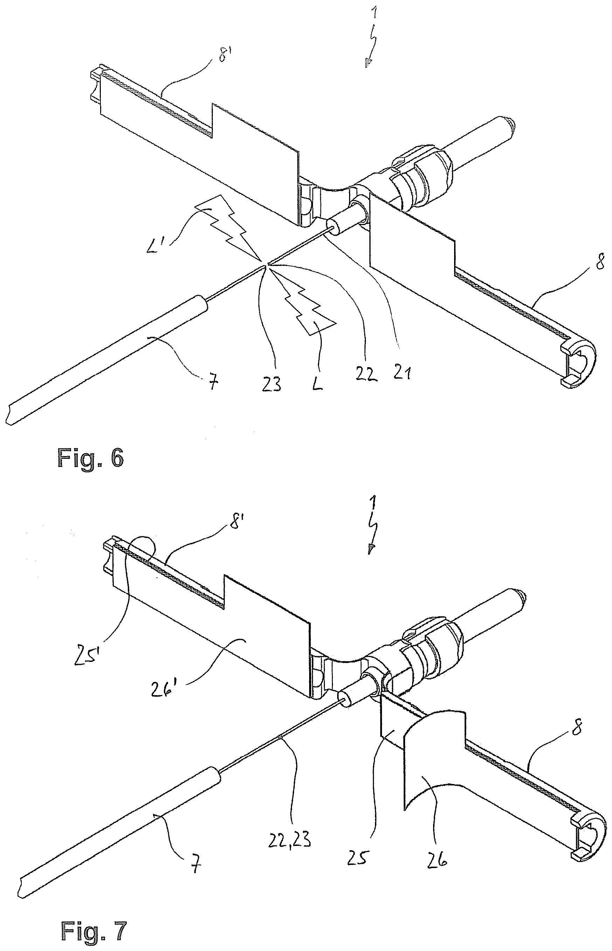

In **Figur 6** wird das Steckerteil 1 gemäss Figur 5 während der Schweissoperation gezeigt. Ein Lichtwellenleiterkabel 7 ist mit einem abisolierten Lichtwellenleiterende 23 an das zu verschweissende Ende 22 des Lichtwellenleiterstummels 21 herangeführt und wird mit diesem verschweisst. Die beiden Pfeile L, L' stellen dabei den Lichtbogen zum Verschweissen der beiden Enden 22, 23 der Lichtwellenleiter dar. Die beiden Gelenke 9, 9' erlauben ein Schwenken der beiden Mantelteile 8, 8' des Lichtwellenleiteraufnahmeabschnittes in die dargestellte Öffnungsstellung, so dass das zu verschweissende Ende 22 des Lichtwellenleiterstummels 21 bzw. das Lichtwellenleiterende 23 des Lichtwellenleiterkabels 7 für die Schweissoperation von allen Seiten frei zugänglich ist.

In der **Figur 7** wird das Steckerteil 1 gemäss Figur 6 nach der Schweissoperation beim Abziehen der Schutzfolie 26 gezeigt. Das Lichtwellenleiterkabel 7 ist mit dem Steckerteil 1 verbunden und die beiden Enden 22, 23 der Lichtwellenleiter sind miteinander verschweisst. Bevor die beiden Mantelteile 8, 8' in ihre Schliessstellung verschwenkt werden, muss je Mantelteil 8, 8' die Schutzfolie 26, 26' abgezogen werden, so dass die beiden Kleberschichten 25, 25' freiliegen.

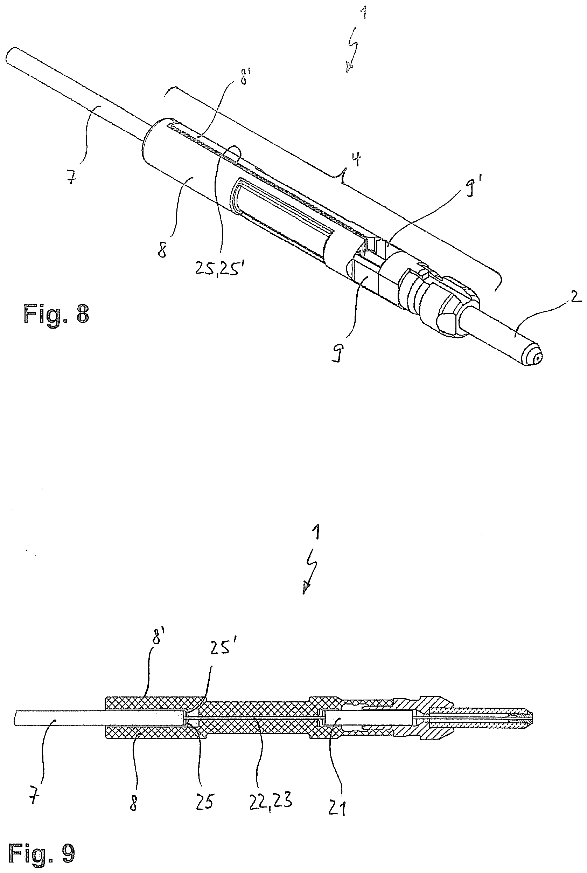

**Figur 8** zeigt das fertig konfektionierte Steckerteil 1. Die beiden Mantelteile 8, 8' sind in ihrer Schliessstellung und werden durch die beiden Kleberschichten 25, 25' zusammengehalten. Die beiden Gelenke 9, 9' sind gestreckt. Das Lichtwellenleiterkabel 7, die Stifthalterung 4 und der Steckerstift 2 bilden eine Einheit.

In **Figur 9** ist ein Querschnitt durch das fertig konfektionierte Steckerteil 1 gemäss Figur 8 dargestellt. Die miteinander verschweissten Ende 22, 23 des Lichtwellenleiterkabels 7 und des Lichtwellenleiterstummels 21 sind zwischen den beiden Mantelteilen 8, 8' eingebettet und werden von den Kleberschichten 25, 25' komplett umschlossen und somit fixiert. Ebenfalls wird durch die beiden Kleberschichten 26, 26' auch der erste Kunststoffmantel des Lichtwellenleiterkabels 7 umschlossen, so dass eine erste Zugentlastung des Lichtwellenleiters bzw. der Schweissstelle gewährleistet ist.

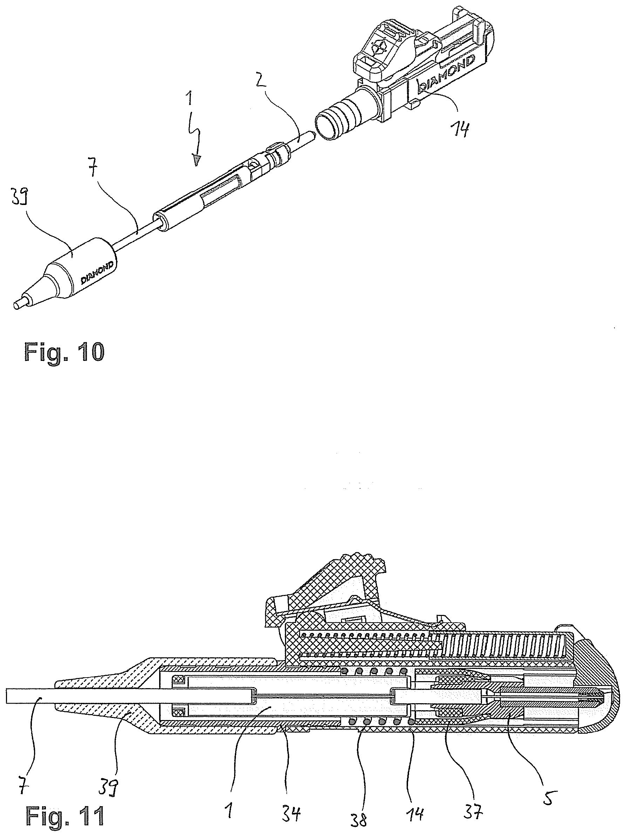

In **Figur 10** ist das Steckerteil 1 gemäss Figur 8 vor dem Einführen in ein entsprechendes Steckergehäuse 14 gezeigt. Das Steckerteil 1 wird dabei mit seinem Steckerstift 2 voran in das Steckergehäuse 14 gesteckt, wo das Steckerteil 1 verrastet. Zum Schutz vor übermässiger Biegebelastung des Lichtwellenleiterkabels 7 ist am hinteren Ende des Steckergehäuses 14 eine Knickschutztülle 39 vorgesehen.

**Figur 11** zeigt einen Querschnitt durch einen fertig konfektionierten Stecker. Das Steckerteil 1 ist dabei in das Steckergehäuse 14 eingeschoben. Eine Einrastkrone 37 dient der sicheren Festhaltung des Steckerteils 1 im Steckergehäuse 14. Finger der Einrastkrone 37 greifen dabei in die umlaufende Nut des Stiftaufnahmeabschnitts 5 des Steckerteils 1. Die Einrastkrone 37 und somit auch das Steckerteil 1 ist entgegen eine Kraft einer Feder 38 beweglich im Steckergehäuse 14 gelagert. Dabei stützt sich die Feder 38 am Crimphals 34, welcher das Steckergehäuse an seinem hinteren Ende begrenzt, ab. Der Knickschutz 39 ist auf den Crimphals 34 aufgesteckt und verhindert eine übermässige Biegebelastung des Lichtwellenleiterkabels 7.

Falls das Lichtwellenleiterkabel zusätzlich eine Zugentlastung in Form von beispielsweise Aramidfasern oder ähnlich und einen weiteren Mantel aufweist, kann mit einer Crimphülse die Zugentlastung in gewohnter Weise fest mit dem Crimphals 34 verbunden werden. Der Knickschutz ist in einem solchen Fall entsprechend ausgeformt, so dass er über die Crimphülse greift.

## Patentansprüche

1. Steckerteil (1) für eine optische Steckverbindung, mit einem Steckerstift (2), in dem ein sich über eine Längsmittelachse (3) erstreckender Lichtwellenleiterstummel (21) gehalten ist und mit einer hülsenartigen Stifthalterung (4), umfassend einen Stiftaufnahmeabschnitt (5), in dem der Steckerstift gehalten ist und einen Lichtwellenleiteraufnahmeabschnitt (6), wobei der Lichtwellenleiteraufnahmeabschnitt (6) wenigstens zwei miteinander verbindbare Mantelteile (8, 8') aufweist, wobei wenigstens ein Mantelteil (8, 8') mit einem Gelenk (9, 9') am Stiftaufnahmeabschnitt (5) so befestigt oder befestigbar ist, dass das Mantelteil um einen bestimmten Schwenkwinkel zwischen einer Öffnungsstellung und einer Schliessstellung schwenkbar ist und der Lichtwellenleiterstummel mit einem insbesondere kabelseitigen Lichtwellenleiterende (23) verschweissbar ist, wobei das zu verschweissende Ende (22) des Lichtwellenleiterstummels (21) im Bereich der Mantelteile (8, 8') liegt, **dadurch gekennzeichnet, dass** am Lichtwellenleiteraufnahmeabschnitt (6) das Ende eines Lichtwellenleiters an den Mantelteilen zugfest fixierbar ist und dass wenigstens eines der Mantelteile (8, 8') wenigstens eine vorzugsweise werkseitig angebrachte Kleberschicht (25, 25') zum Verbinden der wenigstens zwei Mantelteile (8, 8') aufweist.

2. Steckerteil (1) nach Anspruch 1, **dadurch gekennzeichnet, dass** die Kleberschicht (25, 25') je auf einer dem benachbarten Mantelteil (8, 8') gegenüberliegenden Berührungsfläche (11, 11') der Mantelteile (8, 8') angeordnet ist.

3. Steckerteil (1) nach Anspruch 1 oder 2, **dadurch gekennzeichnet, dass** die Kleberschicht (25, 25') vor der Verarbeitung des Steckerteils (1) durch eine Schutzfolie (26, 26') abgedeckt ist.

4. Steckerteil (1) nach einem der Ansprüche 1 bis 3, **dadurch gekennzeichnet, dass** die Kleberschicht (25, 25') derart elastisch ist, dass beim Zusammendrücken und Verkleben der beiden Mantelteile der zwischen den beiden Mantelteilen bzw. zwischen den beiden Kleberschichten befindliche geschweisste Lichtwellenleiter vollständig von den Kleberschichten umhüllt wird.

5. Steckerteil (1) nach einem der Ansprüche 1 bis 4, **dadurch gekennzeichnet, dass** die Kleberschicht (25, 25') eine Dicke zwischen 80µm und 300 µm, insbesondere zwischen 100µm und 200µm, vorzugsweise zwischen 125µm und 150µm aufweist.

6. Steckerteil (1) nach einem der Ansprüche 1 bis 5, **dadurch gekennzeichnet, dass** die Kleberschicht (25, 25') aus einem doppelseitigen Klebeband besteht.

7. Steckerteil (1) nach Anspruch 6, **dadurch gekennzeichnet, dass** das doppelseitige Klebeband einen Kleber aus einem Acrylpolymer beinhaltet.

8. Steckerteil (1) nach einem der Ansprüche 1 bis 7, **dadurch gekennzeichnet, dass** der Lichtwellenleiteraufnahmeabschnitt (6) ein Kopfteil (12) zum Verbinden mit dem Stiftaufnahmeabschnitt (5) und zwei Mantelteile (8, 8') aufweist.

9. Steckerteil (1) nach Anspruch 8, **dadurch gekennzeichnet, dass** wenigstens ein Mantelteil (8, 8') mit einem Gelenk (9, 9') am Kopfteil (12) befestigt ist.

10. Steckerteil (1) nach einem der Ansprüche 1 bis 7, **dadurch gekennzeichnet, dass** der Stiftaufnahmeabschnitt (5) und die Mantelteile (8, 8') des Lichtwellenleiteraufnahmeabschnittes (6) einstückig ausgebildet sind.

11. Steckerteil (1) nach einem der Ansprüche 1 bis 7, **dadurch gekennzeichnet, dass** die Stifthalterung (4) aus zwei Schalenteilen besteht, die entlang der Längsmittelachse (3) zusammensetzbar sind und wenigstens ein Mantelteil (8, 8') mit einem Gelenk (9, 9') an einem Schalenteil befestigt ist.

12. Steckerteil (1) nach einem der Ansprüche 9 bis 11, **dadurch gekennzeichnet, dass** die Stifthalterung (4) mindestens teilweise aus Kunststoffmaterial besteht und dass das Gelenk (9, 9') ein Filmscharnier ist.

13. Steckerteil (1) nach einem der Ansprüche 1 bis 12, **dadurch gekennzeichnet, dass** die Mantelteile (8, 8') ineinander greifende Positioniermittel für die passgenaue Zusammenfügung aufweisen.

## Claims

1. Plug part (1) for an optical plug-in connection, with a plug pin (2), in which an optical waveguide stub (21) is held, said optical waveguide stub extending over a longitudinal mid-axis (3), and with a bush-like pin holder (4), comprising a pin receiving section (5), in which the plug pin is held, and an optical waveguide receiving section (6), the optical waveguide receiving section (6) having at least two casing parts (8, 8') which can be connected to one another, at least one casing part (8, 8') being fastened or being able to be fastened on the pin receiving section (5) using a hinge (9, 9') in such a way that the casing part can be pivoted through a predetermined pivot angle between an open position and a closed position and the optical waveguide stub can be welded to an in particular cable-side optical waveguide end (23), that end (22) of the optical waveguide stub (21) which is intended to be welded being located in the region of the casing parts (8, 8'), **characterized in that** the end of an optical waveguide can be fixed to the casing parts of the optical waveguide receiving section (6) in a manner resistant to high tensile stress, and **in that** at least one of the casing parts (8, 8') has at least one adhesive layer (25, 25'), which is preferably applied in the factory, for connecting the at least two casing parts (8, 8').

2. Plug part (1) according to Claim 1, **characterized in that** the adhesive layer (25, 25') is arranged in each case on one touching face (11, 11') of the casing parts (8, 8'), said touching face lying opposite the adjacent casing part (8, 8').

3. Plug part (1) according to Claim 1 or 2, **characterized in that** the adhesive layer (25, 25') is covered by a protective film (26, 26') prior to the processing of the plug part (1).

4. Plug part (1) according to one of Claims 1 to 3, **characterized in that** the adhesive layer (25, 25') is elastic such that, when the two casing parts are pressed together and adhesively bonded, the welded optical waveguide which is located between the two casing parts or between the two adhesive layers is enveloped completely by the adhesive layers.

5. Plug part (1) according to one of Claims 1 to 4, **characterized in that** the adhesive layer (25, 25') has a thickness of between 80 µm and 300 µm, in particular between 100 µm and 200 µm, preferably between 125 µm and 150 µm.

6. Plug part (1) according to one of Claims 1 to 5, **characterized in that** the adhesive layer (25, 25') consists of a double-sided adhesive tape.

7. Plug part (1) according to Claim 6, **characterized in that** the double-sided adhesive tape contains an adhesive consisting of an acrylic polymer.

8. Plug part (1) according to one of Claims 1 to 7, **characterized in that** the optical waveguide receiving section (6) has a top part (12) for connection to the pin receiving section (5) and two casing parts (8, 8').

9. Plug part (1) according to Claim 8, **characterized in that** at least one casing part (8, 8') is fastened to the top part (12) using a hinge (9, 9').

10. Plug part (1) according to one of Claims 1 to 7, **characterized in that** the pin receiving section (5) and the casing parts (8, 8') of the optical waveguide receiving section (6) are formed integrally.

11. Plug part (1) according to one of Claims 1 to 7, **characterized in that** the pin holder (4) consists of two shell parts, which can be assembled along the longitudinal mid-axis (3), and at least one casing part (8, 8') is fastened to a shell part using a hinge (9, 9').

12. Plug part (1) according to one of Claims 9 to 11, **characterized in that** the pin holder (4) consists at least partially of a plastic material, and **in that** the hinge (9, 9') is a film hinge.

13. Plug part (1) according to one of Claims 1 to 12, **characterized in that** the casing parts (8, 8') have positioning means which engage one inside the other for joining said parts with an accurate fit.

## Revendications

1. Élément à enficher (1) pour une connexion optique à enficher, comprenant une broche à enficher (2) dans laquelle est maintenue une amorce de fibre optique (21) qui s'étend sur un axe central longitudinal (3) et comprenant une attache de broche (4) en forme de douille, comportant une portion d'accueil de broche (5) dans laquelle est maintenue la broche à enficher et une portion d'accueil de fibre optique (6), la portion d'accueil de fibre optique (6) possédant au moins deux parties d'enveloppe (8, 8') pouvant être reliées l'une à l'autre, au moins une partie d'enveloppe (8, 8') étant fixée ou pouvant être fixée par une articulation (9, 9') à la portion d'accueil de broche (5) de telle sorte que la partie d'enveloppe peut pivoter selon un angle de pivotement donné entre une position d'ouverture et une position de fermeture, et l'amorce de fibre optique peut être soudée avec une extrémité de fibre optique (23) se trouvant notamment du côté du câble, l'extrémité (22) à souder de l'amorce de fibre optique (21) se trouvant dans la zone des parties d'enveloppe (8, 8'), **caractérisé en ce qu'**une fixation de l'extrémité d'une fibre optique aux parties d'enveloppe avec résistance à la traction peut être réalisée au niveau de la portion d'accueil de fibre optique, et **en ce qu'**au moins l'une des parties d'enveloppe (8, 8') possède au moins une couche d'adhésif (25, 25'), de préférence appliquée en usine, pour l'assemblage des au moins deux parties d'enveloppe (8, 8').

2. Élément à enficher (1) selon la revendication 1, **caractérisé en ce que** la couche d'adhésif (25, 25') est à chaque fois disposée sur une surface de contact (11, 11') des parties d'enveloppe (8, 8') qui se trouve en vis-à-vis de la partie d'enveloppe (8, 8') voisine.

3. Élément à enficher (1) selon la revendication 1 ou 2, **caractérisé en ce que** la couche d'adhésif (25, 25') est recouverte par un film protecteur (26, 26') avant la mise en oeuvre de l'élément à enficher (1).

4. Élément à enficher (1) selon l'une des revendications 1 à 3, **caractérisé en ce que** la couche d'adhésif (25, 25') est élastique de telle sorte que lors de la compression et du collage des deux parties d'enveloppe, la fibre optique soudée qui se trouve entre les deux parties d'enveloppe ou entre les deux couches d'adhésif est entièrement enrobée par les couches d'adhésif.

5. Élément à enficher (1) selon l'une des revendications 1 à 4, **caractérisé en ce que** la couche d'adhésif (25, 25') présente une épaisseur entre 80 µm et 300 µm, notamment entre 100 µm et 200 µm, de préférence entre 125 µm et 150 µm.

6. Élément à enficher (1) selon l'une des revendications 1 à 5, **caractérisé en ce que** la couche d'adhésif (25, 25') se compose d'un ruban adhésif à double face.

7. Élément à enficher (1) selon la revendication 6, **caractérisé en ce que** le ruban adhésif à double face contient un adhésif à base d'un polymère acrylique.

8. Élément à enficher (1) selon l'une des revendications 1 à 7, **caractérisé en ce que** la portion d'accueil de fibre optique (6) possède un élément de tête (12) destiné à être assemblé avec la portion d'accueil de broche (5) et deux parties d'enveloppe (8, 8').

9. Élément à enficher (1) selon la revendication 8, **caractérisé en ce qu'**au moins une partie d'enveloppe (8, 8') est fixée à l'élément de tête (12) par une articulation (9, 9').

10. Élément à enficher (1) selon l'une des revendications 1 à 7, **caractérisé en ce que** la portion d'accueil de broche (5) et les éléments d'enveloppe (8, 8') de la portion d'accueil de fibre optique (6) sont réalisés d'un seul tenant.

11. Élément à enficher (1) selon l'une des revendications 1 à 7, **caractérisé en ce que** l'attache de broche (4) se compose de deux parties de coque qui peuvent être assemblées le long de l'axe central longitudinal (3) et au moins une partie d'enveloppe (8, 8') est fixée à une partie de coque par une articulation (9, 9').

12. Élément à enficher (1) selon l'une des revendications 9 à 11, **caractérisé en ce que** l'attache de broche (4) est constituée au moins partiellement de matière plastique et **en ce que** l'articulation (9, 9') est une charnière à membrane.

13. Élément à enficher (1) selon l'une des revendications 1 à 12, **caractérisé en ce que** les parties d'enveloppe (8, 8') possèdent des moyens de positionnement s'imbriquant les uns dans les autres pour un assemblage avec ajustement précis.
